# EUROPÄISCHE PATENTSCHRIFT

(11) **EP 2 616 347 B1**
(45) Veröffentlichungstag und Bekanntmachung des Hinweises auf die Patenterteilung: **17.12.2014**
(21) Anmeldenummer: 11748676.1
(22) Anmeldetag: 26.08.2011
(51) Int. Cl.: B65D 5/74

(54) **VERSCHLIESSBARE ÖFFNUNGSVORRICHTUNG FÜR EINE VERSIEGELTE VERPACKUNG**
CLOSEABLE OPENING DEVICE FOR A SEALED PACKAGE
DISPOSITIF D'OUVERTURE REFERMABLE POUR EMBALLAGE SCELLÉ

(30) Priorität: 29.04.2011 DE 102011017797; 15.09.2010 DE 102010040825
(43) Veröffentlichungstag der Anmeldung: 24.07.2013
(73) Patentinhaber: Robert Bosch GmbH, 70442 Stuttgart (DE)
(72) Erfinder: BARRON, Dan, CH-8200 Schaffhausen (CH)
(86) Internationale Anmeldenummer: PCT/EP2011/064716
(87) Internationale Veröffentlichungsnummer: WO 2012/034838

(56) Entgegenhaltungen:
- WO-A1-95/25042
- WO-A1-2004/083055
- WO-A2-2008/092289

## Beschreibung

Die vorliegende Erfindung betrifft eine verschliessbare Öffnungsvorrichtung für eine versiegelte Verpackung, die ein fliessfähiges Medium enthält, wobei die Vorrichtung einen Ausgussstutzen mit zylindrischem Rohrabschnitt und Flansch aufweist, der mit einem Innengewinde und einem Aussengewinde versehen ist, sowie ein zylindrisches Schneidelement, dessen unterer Rand mit einem oder mehreren Zähnen ausgestattet ist, und dessen innere Mantelfläche mit in radialer Richtung vorstehenden Mitnehmern versehen ist, die mit Mitnehmern in einer Schraubkappe mit Mantelwand und Deckfläche zusammenwirken, wobei der Ausgussstutzen und das zylindrische Schneidelement über Sollbruchstellen miteinander verbunden als einstückiges Halbfabrikat gefertigt sind.

Eine verschliessbare Öffnungsvorrichtung der eingangs genannten Art ist aus der EP-A 1088764 bekannt. Hierbei wird ein Prinzip angewendet, welches in der Verschlusstechnik allgemein üblich ist, indem man mehrteilige Verschlüsse so fertigt, dass zwei Teile übereinander angeordnet und über Sollbruchstellen miteinander verbunden einstückig gespritzt werden. Hierbei wird einerseits der Aufwand an Werkzeugen reduziert und zum anderen die Montage vereinfacht, da die über Sollbruchstellen miteinander verbundenen Teile bereits in ihrer exakt ausgerichteten Relativlage zueinander angeordnet sind und somit lediglich zusammengeschoben werden müssen. Diese an sich hinreichend bekannte Technologie wurde auch für die hier interessierenden Verschlüsse schon früher anwendet und ist beispielsweise auch aus der EP-A 1084060 bekannt.

Bei beiden Dokumenten ist ein Halbfabrikat offenbart, welches eine einstückige Fertigung eines Ausgussstutzens mit einem Flansch zusammen mit einem zylindrischen Schneidelement zeigt. Das Schneidelement gemäss der EP-A 1084060 besitzt weder am oberen noch am unteren Rand eine plane Fläche, welche geeignet ist mit einem oberen oder unteren Rand des Ausgussstutzens umlaufend verbunden zu werden. Zwangsläufig ist daher hier eine Lösung offenbart, bei der das Schneidelement in einer Zwischenlage innerhalb des Ausgussstutzens über Sollbruchstellen mit dem unteren Rand des Ausgussstutzens verbunden als Halbfabrikat gefertigt ist.

Eine verschliessbare Öffnungvorrichtung der eingangs genannten Art ist auch aus WO 2008/092289, WO 95/25042 und WO 2004/083055 bekannt.

Bei beiden Lösungen ist jedoch die Vormontage bei der das Schneidelement in den Ausgussstutzen hineingeschoben werden muss, keineswegs so trivial wie dies auf Anhieb scheinen mag. Versiegelte Verpackungen aus Laminaten oder Kunststofffolien, auf denen die hier interessierenden Öffnungsvorrichtungen angebracht werden, sind oder enthalten eine Kunststofffolie die problematisch zu durchtrennen ist, da das Material eine hohe Zähigkeit aufweist und entsprechend eine hohe Festigkeit der Zähne verlangt. Trotzdem können diese Zähne nicht einfach beliebig robust gestaltet werden, da diese auch das Material durchstossen und schneiden können müssen. Entsprechend dürfen die Zähne bei der Montage nicht in Mitleidenschaft gezogen werden. Dieses Problem löst die WO 2007/051328. Diese Lösung besteht darin, das Schneidelement und Ausgussstutzen so zueinander gehalten sind, dass ein einfacher axialer Druck auf den oberen Rand der plan in einer senkrechten Ebene zur Rotationsachse verläuft, erfolgen kann. Ist diese Montage erfolgt, so muss nun die Schraubkappe korrekt axial ausgerichtet aufgesetzt werden. Dies erfolgt bisher dadurch, dass man die Schraubkappe praktisch in beliebiger Winkellage zum Durchstoßer aufsetzt und nachher die Schraubkappe mit seinem Innengewinde ratschenartig über das Aussengewinde am Ausgussstutzen hinwegdrückte. An sich ist dies unproblematisch im Bezug auf die Montage. Ein Problem hat sich jedoch gezeigt indem nun die Mitnehmer an der Schraubkappe und die entsprechenden Mitnehmer am Schneidorgan hierbei praktisch eine beliebige Winkelstellung zueinander haben können. Da bei der Erstöffnung zuerst das Garantieband abgetrennt werden muss und dabei bereits ein relativ hohes Drehmoment erforderlich ist, neigt der Benutzer dazu dieses Drehmoment ruckartig anzulegen. Dabei kann es nun vorkommen, dass die Mitnehmer der Schraubkappe über die Mitnehmer des Ausgussstutzens springen können.

Zusätzlich wird das höchste Drehmoment dann erforderlich, wenn die Zähne die Folie der versiegelten Verpackung öffnen müssen. In diesem Moment kann es wiederum vorkommen, dass die Mitnehmer übereinander springen. Erfolgt dies ist eine vollständige Öffnung der Folie bei der Erstöffnung oftmals nicht mehr garantiert.

Um das erste Problem zu lösen hat man teilweise Montagelinien gebaut, welche die Schraubkappe in einer exakten Winkellage zum Schneidelement gedreht haben und erst dann zusammengeschoben haben, so dass im montierten Zustand bereits die Mitnehmer korrekt mindestens annähernd aneinander anliegend in Position gebracht sind. Dies hat sowohl an der Schraubkappe wie auch am Halbfabrikat entsprechende Positionierungsmittel verlangt, die mechanisch oder optisch abgetastet werden können. Dies ist aber mit wesentlich höheren Montagekosten verbunden.

Bezüglich dem zweiten Problem besteht bis anhin keine vernünftige Lösung.

Es ist folglich die Aufgabe der vorliegenden Erfindung eine verschliessbare Öffnungsvorrichtung der eingangs genannten Art so zu verbessern, dass die vorgenannten Probleme gelöst werden ohne dass hierbei die Montagekosten erhöht werden.

Diese Aufgabe löst eine verschliessbare Öffnungsvorrichtung gemäss dem Oberbegriff des Patentanspruches 1 dadurch, dass das zylindrische Schneidelement an seinem oberen Rand mehrerer über den Umfang gleichmässig verteilte Ausnehmungen aufweist und in der Schraubkappe zu den Ausnehmungen gegengleiche Ringwandabschnitte an der Deckfläche angeformt sind, die auf den oberen Rand des Schneidelementes bei einer Drehbewegung zu gleiten vermögen bis sie in die Vertiefungen im oberen Rand einrasten.

Weitere vorteilhafte Ausgestaltungsformen des Erfindungsgegenstandes sind in den abhängigen Ansprüchen offenbart und deren Bedeutung und Wirkungsweise wird in der nachfolgenden Beschreibung mit Bezug auf die anliegende Zeichnung erläutert. Es zeigt:
- Figur 1: die erfindungsgemässe verschliessbare Öffnungsvorrichtung im montierten Endzustand vor der Erstöffnung in einem diametralen Vertikalschnitt;
- Figur 2: zeigt das zylindrische Schneidelement für sich allein in einer Seitenansicht. In
- Figur 3: ist dieses Schneidelement in der Herstellungslage zusammen mit dem Ausgussstutzen dargestellt, die zusammen ein Halbfabrikat bilden und dieses Halbfabrikat, ist in
- Figur 4: in derselben Lage jedoch schräg von oben perspektivisch dargestellt.
- Figur 5: zeigt einen diametralen Vertikalschnitt durch die Schraubkappe vor der Montage und
- Figur 6: zeigt diese Schraubkappe aufgesetzt auf das Halbfabrikat in einem diametralen Vertikalschnitt bevor die Schraubkappe axial nach unten gedrückt worden ist und dabei das Schneidelement vom Ausgussstutzen trennt und in die Endlage gelangt, wie dies in der Figur 1 dargestellt ist.

Die verschliessbare Öffnungsvorrichtung ist insgesamt mit 1 bezeichnet. Sie besteht aus einem Ausgussstutzen 2, einem Schneidelement 3 und einer Schraubkappe 4. Gefertigt wird jedoch die Öffnungsvorrichtung nicht aus drei Teilen, nämlich wie erwähnt aus Ausgussstutzen, Schneidelement und Schraubkappe sondern aus zwei Teilen, nämlich dem Halbfabrikat 5 und der Schraubkappe 4. Das Halbfabrikat 5 besteht aus dem Ausgussstutzen 2 und dem Schneidelement 3, welche zentrisch darüber und mit seinen Schneidzähnen in den zylindrischen Rohrabschnitt des Ausgussstutzens 2 hineinragend über Sollbruchstellenbrücken miteinander verbunden sind. Vorerst werden nun die Einzelteile der verschliessbaren Öffnungseinrichtung je für sich beschrieben.

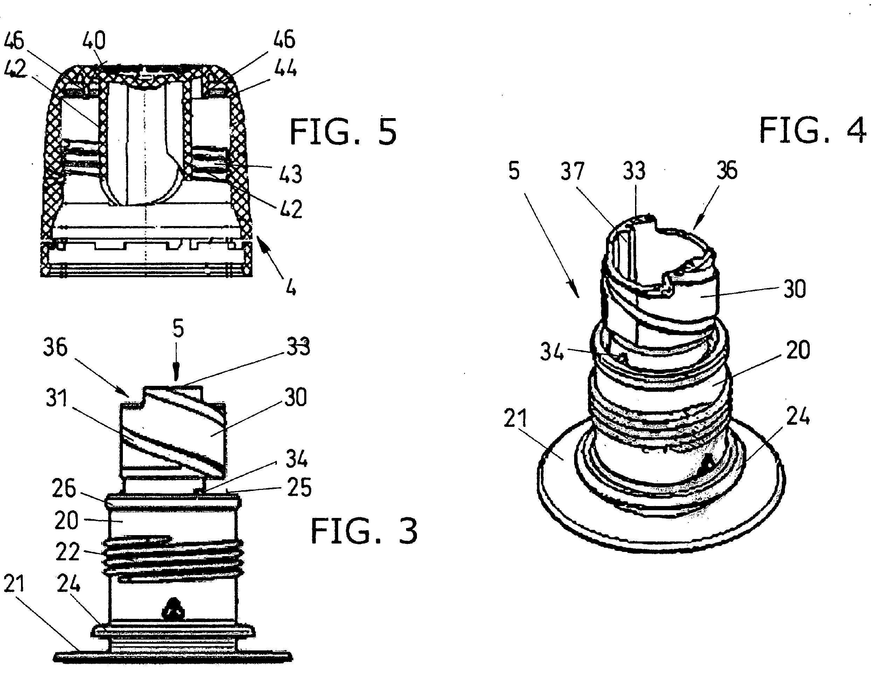

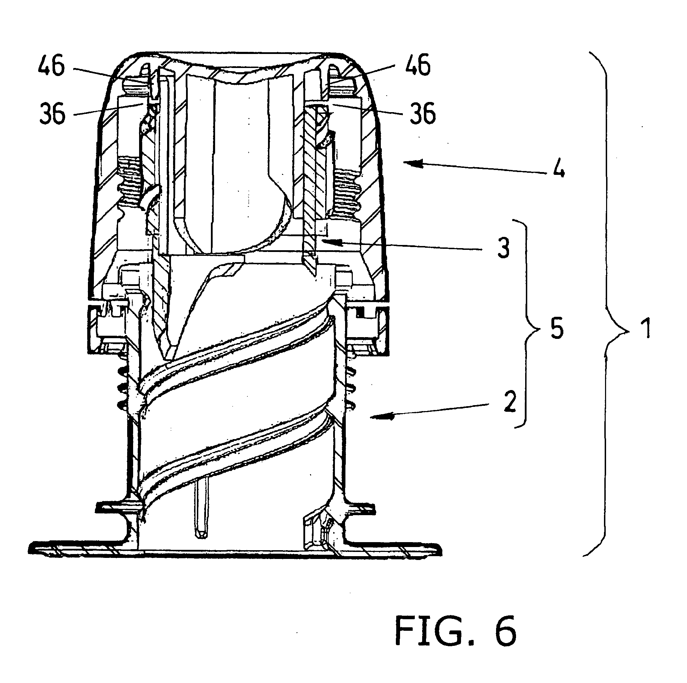

Mit Verweis auf die Figuren 3 und 6 wir nunmehr vorerst der Ausgussstutzen 2 im Detail beschreiben, danach das Schneidelement 3 und schliesslich die Kombination von Ausgussstutzen und Schneidelement, nämlich das Halbfabrikat 5. Der Ausgussstutzen 2 besteht aus einem zylindrischen Rohrabschnitt 20 der einen unteren, endständigen Flansch 21 aufweist. Der zylindrische Rohrabschnitt 20 weist in der oberen Hälfte angeordnet einen Abschnitt mit Aussengewinde 22 auf. Dieses Aussengewinde 22 ist als Feingewinde ausgebildet. Auf der Innenseite ist der Rohrabschnitt mit einem Innengewinde 23 versehen, wobei das Gewinde einen trapezförmigen Querschnitt aufweist. Dieses Gewinde erstreckt sich über die gesamte Länge des Ausgussstutzens und dieses Innengewinde 23 besitzt im Gegensatz zum Feingewinde 22 eine grosse Gewindesteigung. Auf der Aussenseite des zylindrischen Rohrabschnittes 20 ist gegenüber dem endständigen Flansch 21 nach oben versetzt ein Rückhaltemittel 24 angeformt. Dieses Rückhaltemittel können einzelne Pfosten oder Zapfen sein oder wie hier dargestellt ein umlaufender Rückhaltekragen 24. Dieses Rückhaltemittel beziehungsweise Rückhaltekragen 24 wirkt im vollständig Zusammengebauten Zustand der verschliessbaren Öffnungsvorrichtung mit einem umlaufenden Garantieband, welches an der Schraubkappe 4 angeformt ist, zusammen. Der zylindrische Rohrabschnitt 20 endet oben in einem planen Rand 25. Der zylindrische Rohrabschnitt 20 kann oben noch mit einer umlaufenden Dichtwulst 26 oder mehreren Dichtwulsten 26, wie in Figur 4 gezeigt, versehen sein. Diese Dichtwulste wirken im zusammengebauten Zustand beziehungsweise im wiederverschlossenen Zustand mit der Schraubkappe 4 zusammen.

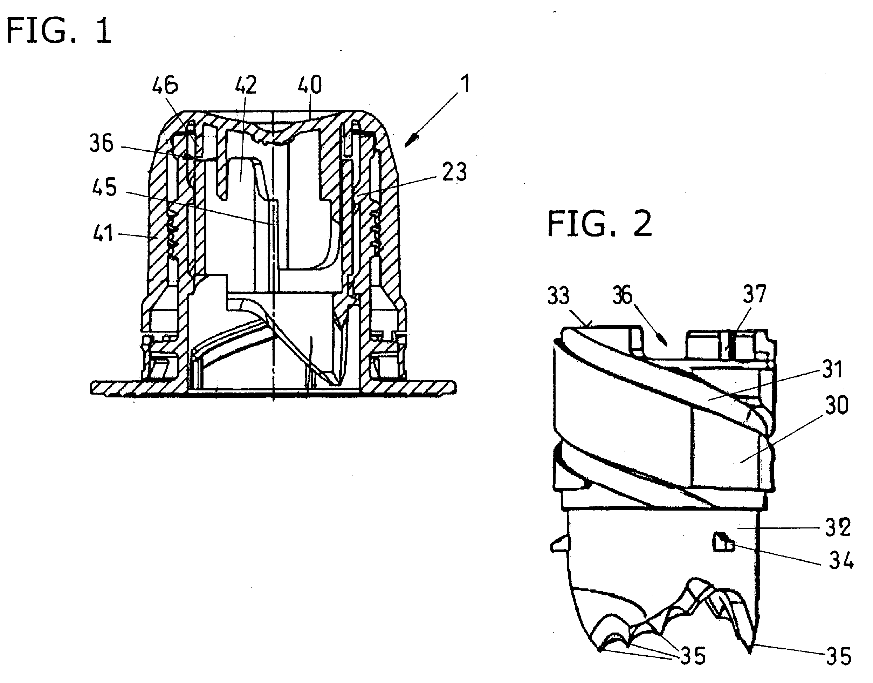

Das Schneidelement 3 besteht ebenso aus einem zylindrischen Rohrabschnitt 30, der größenmäßig so gestaltet ist, dass dieser konzentrisch zum zylindrischen Rohrabschnitt 20 des Ausgussstutzen 2 in diesen hinein passend schraubbar ist. Entsprechend weist das Schneidelement ein Aussengewinde 31 auf, in welches das Innengewinde 23 im zylindrischen Rohrabschnitt 20 des Ausgussstutzens 2 passt. Entsprechend ist dieses Aussengewinde 31 mit einem gegengleichen trapezförmigen Querschnitt versehen. Dies erkennt man am deutlichsten in der Figur 2. Hier ersieht man auch, dass fluchtend unter dem zylindrischen Rohrabschnitt 30 eine Teilringwand 32 angeformt ist. Diese Teilringwand 32 besitzt an seinem unteren Ende mindestens einen oder wie in Figur 2 dargestellt, mehrere kaskadenförmig einander folgenden Schneid- beziehungsweise Perforierzähne 35. Der obere Rand 33 des zylindrischen Rohrabschnittes 30 ist im wesentlichen plan. Von diesem oberen Rand 33 zu den Zähnen 35 beziehungsweise der Teilringwand 32 hin gerichtet sind Ausnehmungen 36 eingeformt. In der hier dargestellten Ausführungsform ist der oberer Rand 33 mit zwei einander diametral gegenüberliegenden Ausnehmungen versehen. Weder die Anzahl noch die Grösse der Ausnehmungen können beliebig sein. Denn je grösser und je mehr Ausnehmungen vorhanden sind, umso kürzer werden die Teilabschnitte des oberen Randes 33. Da aber, wie später noch zu beschreiben ist, dieser obere Rand 33 als Gleitfläche für die Schraubkappe 4 während der Montage dient, muss sichergestellt sein, dass die Schraubkappe bis zur gewünschten Endlage auf diesen oberen Rand 33 zu gleiten vermag und dass die Kappe nicht ungleichmässig abgestützt ist und somit in eine geneigte Lage zum Schneidelement 3 beziehungsweise zum Halbfabrikat 5 kommt. Sinnvoll und bevorzugt sind somit zwei bis maximal vier gleichmässig über den Umfang verteilte Ausnehmungen 36. Insbesondere die hier dargestellte Ausführungsform mit zwei diametral einander gegenüberliegenden Ausnehmungen wird bevorzugt, da sich so grosse Auflage- und Gleitflächen für die Schraubkappe ergeben und zudem eine sehr stabile Lösung erzeugt wird.

Das Schneidelement 3 wie in der Figur 2 dargestellt ist normalerweise so nicht sichtbar. Normalerweise ist das Schneidelement vor der Montage mit der Teilringwand 32 in den zylindrischen Rohrabschnitt 20 hineinragend mit dem Ausgussstutzen 2 über Sollbruchstellenbrücken 34 verbunden. Ungewöhnlich ist nicht nur die Anordnung dieser Sollbruchstellenbrücken 34 sondern auch deren relativ grosse Dimensionierung. Dies hängt damit zusammen, dass die hier dargestellte Lösung zu einer gegenüber bekannten Varianten wesentlich stabileren Gestaltung angeordnet ist und somit auch die stabileren Sollbruchstellenbrücken 34 problemlos zerstört werden können. Durch die Ausnehmung 36 in Figur 2 und durch die geneigte Ansicht von oben in Figur 4 erkennt man auch die an der Innenseite des zylindrischen Rohrabschnittes 3 angeformte Mitnehmer 37.

In der Figur 5 ist die Schraubkappe für sich allein in einem Diametralschnitt dargestellt. Die Schraubkappe 4 weist eine Deckfläche 40 und eine Mantelwand 41 auf. In der Mantelwand 41 ist ein Innengewinde 43 eingeformt, welches als Feingewinde gestaltet ist und mit dem Aussengewinde 22 am zylindrischen Rohrabschnitt 20 zusammenpasst. Unterhalb der Deckfläche 40 und an der Mantelwand 41 angeformt ist eine Dichtwulst 44 vorgesehen. Zwei flügelartige Teilwände 42 besitzen rippenartige Verdickungen welche Mitnehmer 45 bilden. Diese Mitnehmer 45 wirken mit den Mitnehmern 37 am Schneidelement 3 zusammen. Im Bereich zwischen den flügelartigen Teilwänden 42 und der umlaufenden Mantelwand 41verläuft konzentrisch zur Mantelwand 41 eine Ringwand mit entsprechenden Ausnehmungen, so dass diese in lauter Ringwandabschnitte 46 unterteilt ist. Diese Ringwandabschnitte 46 sind gleich dimensioniert wie die Ausnehmungen 36 im oberen Rand des Rohrabschnittes 30 des Schneidelementes 3. Bei der Montage ist das Halbfabrikat 5 wie es in der Figur 4 gezeigt ist, in einer exakt axialen Ausrichtung gehalten. In gleicher axialer Ausrichtung wird durch die Montagemaschine ebenso die Schraubkappe 4 mit gleicher axialer Ausrichtung gehalten. Die Schraubkappe 4 kann nun praktisch durch ihr Eigengewicht auf das Halbfabrikat 5 aufgesetzt werden. Hierbei spielt die radiale Ausrichtung keine Rolle. Die Schraubkappe 4 gleitet nun mit den Ringwandabschnitten 46 auf den oberen Rand 33 bis die Ringwandabschnitte 46 durch das Eigengewicht der Schraubkappe 4 in die Ausnehmungen 36 eintauchen. Da man hier mit relativ hohen Geschwindigkeiten arbeiten will, kann es jedoch sinnvoll sein während dieser Relativverdrehung eine minimale Druckkraft auf die Schraubkappe 4 auszuüben, die ein schnelles Eintauchen der Ringwandabschnitte 46 in die Ausnehmungen 36 sicherstellen. In diesen Positionen greifen nun auch die Mitnehmer 37 und 42 anliegend aneinander. Hierdurch ist auch sichergestellt, dass bei relativ hohen Relativdrehbewegungen der beiden Teile zueinander es verunmöglicht ist, dass die Ringwandabschnitte 46 praktisch über die Ausnehmungen 36 springen können. In dieser Position sind nun Schraubkappe 4, Schneidelement 3 und Ausgussteil 2 alle zusammen in radial ausgerichteter Lage zueinander gehalten und können nun positionsgenau einfach in axialer Richtung zusammengeschoben werden.

Im zusammengebauten Zustand, wie dies die Figur 1 zeigt, verbleiben die Ringwandabschnitte 46 in den Ausnehmungen 36 und Schraubkappe 4 und Schneidelement 3 sind im Gegensatz zu den bisherigen Konstruktionen nicht nur kraftschlüssig miteinander verbunden, indem die Mitnehmer aufeinandergedrückt sind, sondern sind in einem echten Formschluss miteinander verbunden. Hierdurch lassen sich wesentlich höhere Kräfte übertragen. Die Gefahr, dass die Mitnehmer 37 und 42 ratschenartig übereinander weg springen ist nicht mehr gegeben. Gerade im Anfangsbereich sind die erforderlichen Kräfte zum Öffnen der Verpackung relativ hoch und in dieser Anfangsposition besteht nunmehr ein Formschluss zwischen dem Schneidelement 3 und der Schraubkappe 4. Erst wenn ein gewisser Drehwinkel durchgeführt ist, die Perforation bereits stattgefunden hat und nunmehr lediglich noch ein Teilschnitt der zu öffnenden Folie erfolgen muss, ist die formschlüssige Verbindung zwischen Schneidelement 3, welches sich nunmehr weiter abwärts bewegt hat, und der Schraubkappe 4, die sich aufwärts bewegt hat, nicht mehr vorhanden und die weitere Relativbewegung der beiden Teile erfolgt nunmehr nur noch durch die kraftschlüssige Übertragung der aneinander anliegenden Mitnehmer.

Wie bereits erwähnt können die Grössen der Ringwandabschnitte 46 und der Ausnehmungen 36 variieren. Bevorzug wird jedoch eine Lösung bei der sich die beiden Ausnehmungen im oberen Bereich des Schneidelementes und die beiden Ringwandabschnitte in der Schraubkappe je über 90° erstrecken, so dass nach maximal einer 90° Drehung Schraubkappe und Schneidelement in der formschlüssigen Lage zueinander in Eingriff gelangen. Im Prinzip brauchen die Ausnehmungen und die Ringwandabschnitte in der Höhe nicht exakt aufeinander abgestimmt sein. Sind die Ringwandabschnitte höher als die Tiefe der Ausnehmungen, so verbleiben während des Einschraubens das Schneidelement 3 und die Schraubkappe 4 länger miteinander im Eingriff. Sinnvollerweise nutzt man bei dieser erfindungsgemässen Konstruktion die maximal zur Verfügung stehenden Höhen. Dies erfolgt dadurch, dass die Höhe der Ringwandabschnitte 46 plus die Höhe des Schneidelementes 3 von der Oberkante der Ausnehmung 36 bis zum tiefsten Punkt des mindestens einen Schneidzahnes 35 geringer ist als die Distanz zwischen der Deckfläche 40 der Schraubkappe 4 im Bereich in dem die Ringwandabschnitte 46 an der Deckfläche angeformt sind und der Unterkante des Flansches 21 des Ausgussstutzens 2.

## Patentansprüche

1. Verschliessbare Öffnungsvorrichtung (1) für eine versiegelte Verpackung, die ein fliessfähiges Medium enthält, wobei die Vorrichtung einen Ausgussstutzen (2) mit zylindrischem Rohrabschnitt (20) und Flansch (21) aufweist, der mit einem Innengewinde (23) und einem Aussengewinde (22) versehen ist, sowie ein zylindrisches Schneidelement (3), dessen unterer Rand (33) mit einem oder mehreren Zähnen (35) ausgestattet ist, und dessen innere Mantelfläche mit in radialer Richtung vorstehender Mitnehmern (37) versehen ist, die mit Mitnehmern (45) in einer Schraubkappe (4) mit Mantelwand (41) und Deckfläche (40) zusammenwirken, wobei der Ausgussstutzen (2) und das zylindrische Schneidelement (3) über Sollbruchstellenbrücken (34) miteinander verbunden als einstückiges Halbfabrikat (5) gefertigt sind, **dadurch gekennzeichnet, dass** das zylindrische Schneidelement (3) an seinem oberen Rand (32) mehrere über den Umfang gleichmässig verteilte Ausnehmungen (36) aufweist und in der Schraubkappe (4) zu den Ausnehmungen (36) gegengleiche Ringwandabschnitte (46) an der Deckfläche (40) angeformt sind, die auf den oberen Rand (33) des Schneidelementes (3) bei einer Drehbewegung zu gleiten vermögen bis sie in die Ausnehmung (36) im oberen Rand (33) einrasten.

2. Öffnungsvorrichtung (1) nach Anspruch 1, **dadurch gekennzeichnet, dass** der obere Rand (33) des Schneidelementes (3) zwei einander diametral gegenüberliegende Ausnehmungen (36) aufweist.

3. Öffnungsvorrichtung (1) nach Anspruch 2, **dadurch gekennzeichnet, dass** die beiden Ausnehmungen (36) sich im oberen Rand (33) des Schneidelementes (3) und die beiden Ringwandabschnitte (46) in der Schraubkappe (4) je über 90° erstrecken.

4. Öffnungsvorrichtung (1) nach Anspruch 1, **dadurch gekennzeichnet, dass** die Höhe der Ringwandabschnitte (46) mindestens gleich der Tiefe der Ausnehmungen (36) ist.

5. Öffnungsvorrichtung (1) nach Anspruch 1, **dadurch gekennzeichnet, dass** die Höhe der Ringwandabschnitte (46) plus die Höhe des Schneidelementes (3) von der Oberkante der Ausnehmung (36) bis zum tiefsten Punkt des mindestens einen Zahnes (35) geringer ist als die Distanz zwischen der Deckfläche (40) der Schraubkappe (4), im Bereich in dem die Ringwandabschnitte (46) an der Deckfläche (40) angeformt sind, und der Unterseite des Flansches (21) des Ausgussstutzens (2).

## Claims

1. Closeable opening device (1) for a sealed pack which contains a free-flowing medium, wherein the device has a pouring nozzle (2) with a cylindrical tube portion (20) and flange (21), the former being provided with a internal thread (23) and an external thread (22), and also has a cylindrical cutting element (3), of which the lower periphery (33) is provided with one or more teeth (35) and the inner lateral surface is provided with radially projecting drivers (37), which interact with drivers (45) in a screw cap (4) having a lateral wall (41) and top surface (40), wherein the pouring nozzle (2) and cylindrical cutting element (3), connected to one another via predetermined-breaking-point bridges (34), are produced in the form of a single-piece semifinished product (5), **characterized in that** the cylindrical cutting element (3), on its upper periphery (32), has a plurality of recesses (36) distributed uniformly over the circumference, and annular-wall portions (46) which are equal and opposite to the recesses (36) are formed on the top surface (40) of the screw cap (4), said annular-wall portions being capable of sliding on the upper periphery (33) of the cutting element (3) during a rotary movement, until they latch into the recess (36) in the upper periphery (33).

2. Opening device (1) according to Claim 1, **characterized in that** the upper periphery (33) of the cutting element (3) has two diametrically opposite recesses (36).

3. Opening device (1) according to Claim 2, **characterized in that** the two recesses (36) each extend over 90° in the upper periphery (33) of the cutting element (3), and the two annular-wall portions (46) each extend over 90° in the screw cap (4).

4. Opening device (1) according to Claim 1, **characterized in that** the height of the annular-wall portions (46) is at least equal to the depth of the recesses (36).

5. Opening device (1) according to Claim 1, **characterized in that** the height of the annular-wall portions (46) plus the height of the cutting element (3) from the upper edge of the recess (36) to the lowermost point of the at least one tooth (35) is smaller than the distance between the top surface (40) of the screw cap (40), in the region in which the annular-wall portions (46) are formed on the top surface (40), and the underside of the flange (21) of the pouring nozzle (2).

## Revendications

1. Dispositif d'ouverture refermable (1) pour un emballage scellé qui contient un milieu coulant, le dispositif comprenant un ajustage de versement (2), doté d'une portion tubulaire cylindrique (20) et d'une collerette (21), qui est pourvu d'un filetage intérieur (23) et d'un filetage extérieur (22), ainsi qu'un élément de coupe cylindrique (3) dont le bord inférieur (33) est doté d'une ou de plusieurs dents (35) et dont la surface d'enveloppe intérieure est pourvue d'éléments d'entraînement (37) faisant saillie dans la direction radiale, lesquels coopèrent avec des éléments d'entraînement (45) dans un capuchon à visser (4) doté d'une paroi d'enveloppe (41) et d'une surface supérieure (40), l'ajustage de versement (2) et l'élément de coupe cylindrique (3) étant reliés l'un à l'autre par le biais de ponts de point de rupture imposée (34) en tant que produit semi-fini d'une seule pièce (5), **caractérisé en ce que** l'élément de coupe cylindrique (3) présente sur son bord supérieur (32) plusieurs évidements (36) répartis uniformément sur la périphérie et des portions de paroi annulaire (46) sur la surface supérieure (40) sont formées de manière opposée aux évidements (36) dans le capuchon à visser (4), lesquelles portions de paroi annulaire peuvent glisser sur le bord supérieur (33) de l'élément de coupe (3) lors d'un mouvement de rotation jusqu'à ce qu'elles s'encliquètent dans l'évidement (36) sur le bord supérieur (33).

2. Dispositif d'ouverture (1) selon la revendication 1, **caractérisé en ce que** le bord supérieur (33) de l'élément de coupe (3) comprend deux évidements (36) diamétralement opposés l'un à l'autre.

3. Dispositif d'ouverture (1) selon la revendication 2, **caractérisé, en ce que** les deux évidements (36) s'étendent chacun sur 90° dans le bord supérieur (33) de l'élément de coupe (3) et les deux portions de paroi annulaire (46) s'étendent chacune sur 90° dans le capuchon à visser (4).

4. Dispositif d'ouverture (1) selon la revendication 1, **caractérisé en ce que** la hauteur des portions de paroi annulaire (46) est au moins égale à la profondeur des évidements (36).

5. Dispositif d'ouverture (1) selon la revendication 1, **caractérisé en ce que** la hauteur des portions de paroi annulaire (46) plus la hauteur de l'élément de coupe (3) à partir du bord supérieur de l'évidement (36) jusqu'au point le plus bas de l'au moins une dent (35) est inférieure à la distance entre la surface supérieure (40) du capuchon à visser (4), dans la région dans laquelle les portions de paroi annulaire (46) sont formées sur la surface supérieure (40), et le côté inférieur de la collerette (21) de l'ajustage de versement (2).
